(19) Europäisches Patentamt
European Patent Office
Office européen des brevets

(11) EP 0 447 071 B1

(12) EUROPEAN PATENT SPECIFICATION

(45) Date of publication and mention of the grant of the patent: **20.11.1996 Bulletin 1996/47**

(51) Int. Cl.$^6$: **C08F 10/02**, C08F 4/76, C08F 4/655

(21) Application number: **91301673.9**

(22) Date of filing: **28.02.1991**

# (54) Catalyst and prepolymer used for polymerising olefins, and (co-)polymer of ethylene obtainable therefrom

Katalysator und Prepolymere für die Polymerisation von Olefin und daraus erhältliches Ethylen(co)polymer

Catalyseur et prépolymère utilisés pour la polymérisation d'oléfines et (co)polymère d'éthylène ainsi obtenu

(84) Designated Contracting States:
**AT BE CH DE DK ES FR GB GR IT LI LU NL SE**

(30) Priority: **12.03.1990 FR 9003367**

(43) Date of publication of application:
**18.09.1991 Bulletin 1991/38**

(73) Proprietors:
- **BP Chemicals Limited**
  **London EC2M 7BA (GB)**
  Designated Contracting States:
  **BE CH DE DK ES GB GR IT LI LU NL SE AT**
- **BP CHEMICALS S.N.C.**
  **92400 Courbevoie (FR)**
  Designated Contracting States:
  **FR**

(72) Inventors:
- **Bailly, Jean-Claude André,**
  **BP Chemicals SNC**
  **BP No. 6, F-13117 Lavera (FR)**
- **Chabrand, Christine Jacqueline,**
  **BP Chemicals SNC**
  **BP No. 6, F-13117 Lavera (FR)**

(74) Representative: **Denbigh, Keith Warwick et al**
**BP INTERNATIONAL LIMITED**
**Patents & Agreements Division**
**Chertsey Road**
**Sunbury-on-Thames Middlesex, TW16 7LN (GB)**

(56) References cited:
**EP-A- 0 206 794**
**EP-A- 0 318 048**
**US-A- 4 659 685**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 447 071 B1

Printed by Rank Xerox (UK) Business Services
2.13.8/3.4

## Description

The present invention relates to a solid catalyst based on a supported zirconium metallocene and to polymerization or copolymerization of olefins, especially of ethylene, using the catalyst.

It is known that it is possible to manufacture polyolefins in the presence of a catalyst system comprising a catalyst based on a zirconium metallocene and a cocatalyst consisting of an organoaluminium compound, especially an aluminoxane. However, this catalyst is preferably employed in solution in an aromatic hydrocarbon; it is not suited to heterogeneous processes of polymerization in suspension in aliphatic hydrocarbons or in gaseous phase.

According to European Patent Application EP.A.0 318 048, it is known to manufacture polyolefins with the aid of a catalyst system comprising a solid catalyst based on $TiCl_4$ or $VOCl_3$ and supported on a spherical carrier consisting of an adduct of a magnesium chloride with an alcohol. The solid catalyst is used for polymerizing olefins with a cocatalyst consisting of zirconium metallocene.

According to European Patent Application EP.A.0 206 794, it is known to prepare an olefin catalyst comprising the reaction product of a metallocene and an aluminoxane formed in the presence of a silica support. The metallocene is selected from titanium, zirconium, hafnium and vandadium metallocenes and mixtures thereof.

For a number of years attempts have been made to develop a high-activity solid catalyst comprising a zirconium metallocene for a heterogeneous process of the (co)polymerization of olefins, especially ethylene. In particular, a solid catalyst which has a relatively high zirconium content has been sought. Attempts have been made, furthermore, to develop a catalyst suited to the heterogeneous processes of polymerization of olefins in suspension in an aliphatic hydrocarbon or in gaseous phase, processes in which it is important to be able to control the size, the particle size distribution and the morphology of the catalyst particles at the same time. It has also been shown to be important that any new solid catalyst should be able to withstand the growth stresses during the polymerization, especially the initial stage of a gas phase polymerization. We have found that the growth stresses with zirconium metallocene catalysts are generally much greater than those of a catalyst based solely on a titanium or vanadium chloride which is less active in olefin polymerization. It is also desirable that the solid catalyst be capable of producing an ethylene polymer or an ethylene copolymer with an easily controllable average molecular weight and a broad molecular weight distribution, so as to enable this polymer or copolymer to be shaped using injection, moulding or extrusion.

It has now been found that it is possible to prepare a solid catalyst with high activity in the (co)polymerization of olefins, containing a zirconium metallocene, preferably in a relatively high quantity and at least one halide of a transition metal chosen from titanium and vanadium supported on a special magnesium chloride. In particular, this catalyst is in the form of spheroidal particles which are suited to the heterogeneous polymerization of olefins in suspension or in gaseous phase and which are capable of withstanding the enormous growth stresses during a polymerization. This catalyst may be used as such in a polymerization or, preferably, in the form of an active prepolymer, producing (co-)polymers of ethylene.

The present invention relates therefore to a solid catalyst suitable for a heterogeneous process for polymerizing one or more olefins, in particular ethylene, the solid catalyst consisting of spheroidal particles having a mass-average diameter, Dm, of 10 to 100 microns and a narrow particle size distribution such that the ratio of Dm to the number-average diameter, Dn, of the particles is not higher than 3, this catalyst comprising:

- a support containing from 90 to 99.9 mol% of magnesium dichloride and from 0.1 to 10 mol% of at least one organic electron-donor compound, D, free from labile hydrogen,
- a zirconium metallocene, preferably with an atomic ratio of Zr/Mg ranging from 0.001 to 0.2,
- at least one halide of a transition metal (TM) chosen from titanium or vanadium, preferably with an atomic ratio of Zr/TM ranging from 0.01 to 100, and
- optionally an organoaluminium compound, preferably with an atomic ratio of Al/Mg ranging from 0 to 2

Any of the support, the zirconium metallocene, the halide of the transition metal (TM) and optionally the organoluminium compound, constituting the components of the catalyst, may have complexed or reacted with one another.

The solid catalyst has a particular magnesium chloride support containing a relatively large quantity of an organic electron-donor compound D. The support comprises magnesium chloride and compound D in relative molar percentages of from 90 to 99.9 mol% preferably from 95 to 99.5 mol% of magnesium dichloride and from 0.1 to 10 mol% preferably from 0.5 to 5 mol% of the compound D.

The support, which is based essentially on magnesium dichloride, may additionally contain a chlorine containing aluminium derivative, such as aluminium trichloride, as well as optionally a magnesium chloride containing some Mg-C bonds. The quantity of chlorine containing aluminium derivative may be lower than or equal to 30 mol%, preferably 20 mol% or less relative to the magnesium dichloride such as 1 to 20 mol%. The quantity of Mg-C bond may be lower than or equal to 10 mol%, preferably 1 mol% or 0.1 mol% or less relative to the magnesium. Especially, the support contains substantially no Mg-C bond.

The organic electron-donor compound, D, is generally known as a Lewis base and must be free from labile hydrogen. It cannot, for example, be chosen from water, alcohols or phenols. It has an ability to complex magnesium dichloride. It is advantageously chosen from ethers, thioethers, esters, sulphones, sulphoxides, secondary amides, tertiary amines, tertiary phosphines and phosphoramides. Electron-donor compounds of low complexing power, such as cyclic or non-cyclic ethers, are preferred.

The organic electron-donor compound, D, is advantageously distributed homogeneously throughout the support particle, forming a homogeneous composition of magnesium dichloride and compound D. Consequently, a support of this kind cannot generally be prepared merely by bringing anhydrous magnesium dichloride particles into contact with the compound D. For this reason it is recommended that the support be prepared by precipitation of magnesium dichloride in the presence of the compound D.

The catalyst consists of spheroidal particles which have a substantially spherical shape, e.g. in which the ratio D/d of the particles is close to 1, D and d being the major and the minor axes of the particles respectively. The ratio D/d is generally lower than or equal to 1.5, preferably 1.4 or 1.3 or less, such as 1 to 1.5, or 1 to 1.4, or 1 to 1.3.

The catalyst particles have a mass-average diameter of 10 to 100 microns, preferably 15 to 70 and especially 20 to 50 microns. They have a narrow particle size distribution, such that the ratio Dm/Dn of the mass-average diameter, Dm, to the number-average diameter, Dn, is not higher than 3, preferably not higher than 2.5 and especially not higher than 2, such as 1 to 3, or 1 to 2.5, or 1 to 2, and especially 1 to 1.8. Preferably there is a virtually total absence of particles of diameter greater than 1.5 x Dm or smaller than 0.6 x Dm; the particle size distribution is usually such that more than 90% by weight of the particles of the same single batch have a particle size in the range Dm $\pm$ 10%.

The solid catalyst also contains a zirconium metallocene. In particular, the zirconium metallocene is a metallocene containing a tetravalent zirconium with at least one Zr-C bond which is a covalent or a pi-bonded one. It is also called zirconocene, and preferably corresponds to the general formula

$$R^4R^5R^6R^7Zr$$

in which $R^4$ denotes a cycloalkadienyl radical or a cycloalkadienyl radical substituted by at least one alkyl radical e.g. of 1 to 6 carbon atoms such as methyl or ethyl, or by at least one alkoxy radical e.g. of 1 to 6 carbon atoms such as methoxy, ethoxy, propoxy or butoxy, or a fused ring cycloalkadienyl group e.g. of 7 to 14 carbon atoms such as idenyl or tetrahydroindenyl, and each $R^5$, $R^6$ or $R^7$ being identical or different denotes a cycloalkadienyl radical, a cycloalkadienyl radical substituted by at least one alkyl or alkoxy radical e.g. of 1 to 6 carbon atoms such as methyl, ethyl, methoxy, ethoxy, propoxy or butoxy, an aryl radical e.g. an aromatic hydrocarbyl group such as one of 6 to 19 carbons atoms e.g. phenyl, an alkyl radical e.g. of 1 to 6 carbon atoms such as methyl or ethyl, a cycloalkyl radical e.g. of 5 to 7 carbon atoms such as cyclohexyl, an aralkyl radical e.g. of 7 to 19 carbon atoms such as aromatic hydrocarbyl alkyl e.g. benzyl, a halogen atom e.g. chlorine or bromine, an alkoxy radical e.g. of 1 to 12 carbon atoms such as methoxy, ethoxy, propoxy or butoxy, or a hydrogen atom, provided that when $R^5$ represents a cycloalkadienyl radical or a substituted cycloalkadienyl radical or a fused ring cycloalkadienyl group, $R^4$ and $R^5$ may be bonded to each other either directly or via a lower alkylene group e.g. of 1 to 4 carbon atoms such as ethylene. The cycloalkadienyl radical is preferably one with a conjugated C5 ring diene group, such as a cyclopentadienyl. Examples of suitable radicals for $R^4$, $R^5$, $R^6$ or $R^7$ may contain 5 to 22 e.g. 6 to 22 carbon atoms and preferably are methylcyclopentadienyl, ethylcyclopentadienyl, dimethylcyclopentadienyl, indenyl, ethylenebisindenyl or tetrahydroindenyl radical. Preferably, the zirconium metallocene may also comprise at least one Zr-X bond, wherein X represents a halogen atom e.g. a chlorine or bromine atom, or an alkoxy radical e.g. of 1 to 12 carbon atoms. The zirconium metallocene may, in particular, be chosen from bis(cyclopentadienyl) dichlorozirconium, bis(cyclopentadienyl)methylchlorozirconium and bis(4,5,6,7-tetrahydroindenyl)ethylenedichlorozirconium.

The zirconium metallocene is present in the solid catalyst with a Zr/Mg atomic ratio preferably ranging from 0.001 to 0.2 particularly from 0.002 to 0.1, especially from 0.003 to 0.08.

The solid catalyst also comprises at least one halide of a transition metal (TM) chosen from titanium or vanadium. The halide usually is a titanium or vanadium non-metallocene halide. The titanium or vanadium halide is preferably a chloride or a bromide and comprises a titanium or a vanadium atom which is tetravalent, trivalent or even divalent, or pentavalent vanadium or a mixture of these metals in these various valency states. Thus, the catalyst may contain a titanium or a vanadium tetrachloride, trichloride or dichloride. It may also comprise a vanadyl halide such as vanadyl trichloride or dichloride. The titanium or vanadium halide may also comprise an alkoxy group e.g. of 1 to 6 carbon atoms such as methoxy, ethoxy, propoxy, isopropoxy, or butoxy.

The transition metal (TM) halide is present in the catalyst with a Zr/TM atomic ratio preferably ranging from 0.01 to 100, preferably from 0.05 to 50 and especially from 0.1 to 20. In particular, these catalysts may offer the advantage of producing ethylene (co-)polymers which have a relatively broad molecular weight distribution.

The solid catalyst may optionally comprise an organoaluminium compound such as a trialkylaluminium e.g. trimethylaluminium, or an alkylaluminium hydride, an alkylaluminium alkoxide, an alkylaluminium halide e.g. diethylaluminium chloride, or preferably an aluminoxane which may be either a linear aluminoxane corresponding to the general formula:

$$(R)_2AlO(Al(R)\text{-}O)_nAl(R)_2$$

in which each R denotes an alkyl radical e.g. of 1 to 6 carbon atoms, such as methyl or ethyl, and n is a number ranging from 2 to 40, preferably from 10 to 20, or a cyclic aluminoxane corresponding to the general formula:

$$\left[ (Al(R)\text{-}O)_{n+2} \right]$$

in which R and n are as defined above. The aluminoxane is preferably a methylaluminoxane.

The organoaluminium compound, preferably the aluminoxane, may be present in the solid catalyst with an atomic ratio Al/Mg preferably ranging from 0 to 2, particularly from 0.01 to 1.5 and especially from 0.05 to 1.2.

The organoaluminium compound, preferably the aluminoxane may also be present in the solid catalyst with an atomic ratio of Al/(Zr + TM) preferably ranging from 0 to 500, preferably from 1 to 200, and especially from 5 to 150.

The present invention also relates to a process for the preparation of the solid catalyst, characterized in that:

(1) a solid support (A) containing from 80 to 99.5 mol% of magnesium dichloride and from 0.5 to 20 mol% of at least one organic electron-donor compound, D, free from labile hydrogen, the solid support (A) being in the form of spheroidal particles having a mass-average diameter, Dm, of 10 to 100 microns and a narrow particle size distribution such that the ratio of Dm to the number-average diameter, Dn, of the particles is not higher than 3, preferably not higher than 2.5 and especially not higher than 2, is brought into contact

(2) with a zirconium metallocene (B), and at least one halide (C) of a transition metal (TM) chosen from titanium or vanadium, and optionally with an organoaluminium compound (E) preferably an aluminoxane.

The solid support (A) employed for preparing the catalyst comprises from 80 to 99.5 mol% preferably from 80 to 95 mol% and especially from 80 to 90 mol% of magnesium dichloride and from 0.5 to 20 mol% preferably from 5 to 20 mol% and especially from 10 to 20 mol% of the compound D defined above. The specific surface area (BET) of (A) may be from 20 to 100 $m^2/g$, preferably from 30 to 60 $m^2/g$. The solid support (A) consists of spheroidal particles whose shape, size and particle size distribution are substantially the same as those of the catalyst particles described above. It may contain a chlorine containing aluminium derivative and magnesium chloride comprising some Mg-C bonds in quantities identical to those of the catalyst described above.

The support may, in particular, be prepared by reacting a dialkylmagnesium compound with an organic chlorine compound in the presence of the electron-donor compound, D, acting as a complexing agent and not as a reactant in this preparation. For this reason in this production, the compound D cannot be chosen from electron-donor compounds such as esters, capable of reacting with organomagnesium compounds. The dialkylmagnesium compound chosen may be a product of formula $R^1MgR^2$ in which $R^1$ and $R^2$ are identical or different alkyl radicals containing from 2 to 12 carbon atoms, and which is soluble in the hydrocarbon medium in which the preparation of the support will preferably be carried out. The organic chlorine compound is an alkyl chloride of formula $R^3Cl$ in which $R^3$ is a secondary or, preferably, tertiary alkyl radical preferably containing from 3 to 12 carbon atoms. It is preferred to employ, as electron-donor compound D, an ether of formula $R^8OR^9$ in which $R^8$ and $R^9$ are identical or different alkyl radicals especially containing from 1 to 12 carbon atoms.

The various reactants used for the preparation of the support (A) can be used with:

- a molar ratio $R^3Cl/R^1MgR^2$ of from 1.5 to 2.5, preferably from 1.9 to 2.3,
- a molar ratio $D/R^1MgR^2$ of from 0.1 to 1.2, preferably from 0.3 to 0.8.

The reaction between $R^1MgR^2$ and $R^3Cl$ in the presence of the electron-donor compound, D, is a precipitation which takes place in an inert liquid medium e.g. a liquid hydrocarbon, with stirring preferably at a temperature of 0 to 100°C. To obtain an excellent support, in particular with a large quantity of the electron-donor compound, D, it is recommended to perform the precipitation reaction at a relatively low temperature ranging from 10 to 50°C, preferably from 15 to 35°C. Preferably the precipitation reaction should proceed extremely slowly, over a period of at least 10 hours e.g. 10 to 50 hours, preferably a period ranging from 10 to 24 hours, so as to permit the formation of the particular support (A), in particular to permit the insertion of a large quantity of compound D and its uniform dispersion in the support.

During the preparation of the catalyst, the support (A) may be employed in the form of a suspension in a saturated aliphatic hydrocarbon or preferably in an aromatic hydrocarbon, in particular toluene. It is also preferred, to use it in the form of a dry powder, in an anhydrous inert atmosphere, for example in a nitrogen atmosphere.

The zirconium metallocene (B) is the metallocene described above. During the preparation of the catalyst, it is preferably used in the form of a solution in a hydrocarbon solvent, especially in an aromatic hydrocarbon such as toluene. The solution may be at a concentration ranging from 0.1 to 50 millimoles of zirconium per litre.

The transition metal (TM) halide (C) employed for preparing the catalyst is the halide described above, which is a titanium or vanadium non-metallocene halide. It is preferably used in the pure state, in the form of a liquid or in solution in a hydrocarbon solvent, preferably an aliphatic hydrocarbon.

The organoaluminium compound, preferably the aluminoxane (E) is that described above. It is preferably used in the form of a solution in a hydrocarbon solvent, in particular in an aromatic hydrocarbon such as toluene. The solution may be at a concentration ranging up to 30% by weight of aluminium.

The contact of the solid support (A) with the zirconium metallocene (B) and the transition metal (TM) halide (C) may be brought about in various ways. It is possible, for example, to add the solid support (A) and then the halide (C) to a solution of the zirconium metallocene (B) or the reverse.

It is also possible to add the support (A) to a mixture containing a solution of the zirconium metallocene (B) and the halide (C). It is also possible to add to the support (A), simultaneously, a solution of the zirconium metallocene (B) and the halide (C), or else, successively, the halide (C) and then a solution of the zirconium metallocene (B). However, it is preferred to add to the support (A) first of all a solution of the zirconium metallocene (B) and then the halide (C).

The contact of the support (A) with the zirconium metallocene (B) and the transition metal (TM) halide (C) may be preferably brought about in the presence of the organoaluminium compound (E), preferably the aluminoxane because the compound (E) helps to deposit in the support relatively high amounts of zirconium, titanium and/or vanadium which are then more strongly bound to the support. This process makes it possible to prepare a catalyst which has in particular a high zirconium and titanium and/or vanadium content, and a morphology and a particle size distribution which are suited to the heterogeneous processes of polymerization in suspension in a liquid aliphatic hydrocarbon or, more particularly, in gaseous phase. In this case, the contact of the support (A) may be brought about in various ways. One of the preferred methods consists in adding to the support (A) first of all simultaneously a solution of the zirconium metallocene (B) and a solution of the compound (E), or preferably a mixture of these two solutions, and then the halide (C). It is also possible to add to a solution of the zirconium metallocene (B) mixed with a solution of the compound (E) first of all the support (A) and then the halide (C).

It is also possible to add to the support (A) first of all a solution of the compound (E) and then, successively, a solution of the zirconium metallocene (B) and the halide (C), or else, successively, the halide (C) and a solution of the zirconium metallocene (B) or else, simultaneously, a solution of the zirconium metallocene (B) and the halide (C).

It is also possible to add to the support (A) first of all the halide (C) and then, successively, a solution of the compound (E) and a solution of the zirconium metallocene (B) or else, successively, a solution of the zirconium metallocene (B) and a solution of the compound (E) or else the two solutions simultaneously or a mixture of the two solutions.

It is also possible to add to a solution of the zirconium metallocene (B) first of all a solution of the compound (E) and then, successively, the support (A) and the halide (C) or else first of all the support (A) and then, successively, a solution of the compound (E) and the halide (C).

It is also possible to add to a solution of the compound (E) first of all the support (A) and then, successively, a solution of the zirconium metallocene (B) and the halide (C) or else, successively, the halide (C) and a solution of the zirconium metallocene (B), or simultaneously, the halide (C) and a solution of the zirconium metallocene (B).

These successive additions may be carried out by being sequenced immediately one after the other or else by being separated by a period ranging from a few minutes to a few hours, preferably from 5 minutes to 5 hours.

In all cases it is preferable that the contact be brought about with agitation e.g. stirring, for a total period ranging from 10 minutes to 20 hours, preferably from 30 minutes to 10 hours. During the contact, the addition of a component may be very fast or slow and uniform over a period which can range from 5 minutes to 5 hours. The temperature may be from 0°C to the boiling temperature of the hydrocarbon solvent employed in the solutions and is preferably from 0°C to 110°C. The temperature may be kept constant throughout the catalyst preparation or may vary depending on the additions performed. The catalyst is prepared under an inert atmosphere and the liquid hydrocarbons when used are free from moisture.

The quantities of the components used for preparing the solid catalyst may be such that:

- the atomic ratio of the quantity of Zr of the organic zirconium metallocene (B) to that of Mg of the solid support (A) is from 0.001 to 1, preferably from 0.005 to 0.5,
- the atomic ratio of the quantity of Al of the compound (E) to that of Zr of the zirconium metallocene (B) is from 0 to 1000, preferably from 5 to 500, and especially from 10 to 200, and
- the atomic ratio of the quantity of transition metal (TM: titanium and/or vanadium) of the halide (C) to that of the Mg of the support (A) is from 0.0005 to 1, preferably from 0.002 to 0.5 and especially from 0.001 to 0.1.

During the catalyst preparation, it is preferred to contact the components (B), (C) and (E) with the support (A) in a slurry in a hydrocarbon solvent, preferably an aromatic hydrocarbon e.g. toluene, at a concentration from 0.01 to 5, preferably from 0.05 to 2 moles of magnesium per litre.

The catalyst preparation may be carried out in the presence of an electron-donor compound added when the components are brought into contact, it being possible for this electron-donor compound to be identical to or different from the compound (D) present in the solid support (A). It may be chosen from organic electron-donor compounds, free from labile hydrogen, as further described above and may also be chosen from organic silicon compounds such as silane compounds having the general formula $R^{10}_{4-n}Si(OR^{11})_n$ wherein $R^{10}$ and $R^{11}$ being identical or different denote alkyl, aryl, cycloalkyl, or aralkyl radicals e.g. of 1 to 19 carbon atoms, and n is a number ranging from 1 to 4; the silane compound may be cyclohexylmethyldimethoxy silane.

The catalyst is obtained in the form of a solid which can be isolated by removing the hydrocarbon solvent(s) employed during the preparation. The solvent(s) may, for example, be evaporated off at atmospheric pressure or at a lower pressure. The solid catalyst may also be washed with liquid hydrocarbon, preferably a saturated aliphatic hydrocarbon such as n-hexane or n-heptane. The catalyst is in the form of spheroidal particles whose morphology, size and particle size distribution are substantially identical with those of the solid support (A) employed for preparing the catalyst and are otherwise as described above.

It has surprisingly been found that the catalyst may comprise a relatively large quantity of zirconium metallocene (B). It is thought that this surprising result is due to the fact that the solid magnesium chloride support employed is of a particular nature and that it comprises, in particular, an electron-donor compound (D) free from labile hydrogen and dispersed homogeneously in the support in a relatively large quantity. This result is all the more surprising since the zirconium metallocene (B) is an organometallic product and no particular reaction is expected between the zirconium metallocene, and the magnesium dichloride-based support and the transition metal (TM) halide. It has been observed, furthermore, that a high proportion of the organic electron-donor compound, D, present initially in the support (A) is extracted from the latter during the catalyst preparation. As a result of this, the catalyst has a compound D content which is lower than that of the support (A) employed for its preparation.

The solid catalyst may be employed directly in a (co)polymerization of olefin, e.g. C2 to C8 alpha-olefin, such as ethylene or propylene, preferably ethylene, in the presence of a cocatalyst chosen from the organometallic compounds of a metal belonging to group II or III of the Periodic Classification of the elements. In particular, the cocatalyst may be one or more organoaluminium compounds such as a trialkylaluminium, an alkyaluminium halide, an alkylaluminium alkoxide or an alkylaluminium halide, e.g. with each alkyl group of 1 to 10 carbon atoms, such as trimethylaluminium, triethylaluminium, tri-n-hexylaluminium, tri-n-octylaluminium or diethylaluminium chloride, and preferably an aluminoxane corresponding to one of the general formulae mentioned above. The organoaluminium compound or preferably the aluminoxane employed as cocatalyst during the polymerization may be identical to or different from that optionally present in the catalyst. The aluminoxane may be employed mixed with an organoaluminium compound such as that described above, e.g. a trialkylaluminium such as trimethylaluminium. When the cocatalyst is an organoaluminium compound, its quantity employed in polymerization is such that the total atomic ratio of the quantity of aluminium to that of zirconium and transition metal (TM) in the polymerization medium is from 10 to 1,000, preferably 10 to 500, especially 20 to 300.

The solid catalyst may be employed as such in polymerization, or preferably in the form of an olefin prepolymer.A prepolymerization step is a preferred method in a heterogeneous process for polymerizing olefins by means of the present catalyst, because both the zirconium metallocene and the transition metal halide are more strongly fixed in the support than a non-prepolymerized catalyst and they are less capable of being extracted from the catalyst and producing fine particles of polymer during the polymerization. Another advantage of transforming the present catalyst into a prepolymer is the improvement of the quality of the polymers obtained therefrom, in particular a polymer powder with a better morphology, higher bulk density and improved flowing properties.

The prepolymer is obtained by bringing the solid catalyst into contact with at least one olefin, e.g. C2 to C8 alpha-olefin, such as ethylene or propylene, preferably ethylene or a mixture of ethylene and at least one alpha-olefin containing from 3 to 8 carbon atoms. The prepolymerization may be performed in a slurry in a liquid hydrocarbon or in a gas phase, at a temperature from 0 to 100°C, preferably from 20 to 90°C, especially from 50 to 80°C, and under a total pressure from 0.1 to 5 MPa. The prepolymerization may be performed in the presence of a cocatalyst, such as the described above, either by adding to the prepolymerization medium the cocatalyst, such as an organoaluminium compound or preferably an aluminoxane or a mixture of an aluminoxane with an organoaluminium compound such as a trialkylaluminium, or by only using the catalyst containing the organoaluminium compound (E) preferably the aluminoxane described above in a sufficient quantity to get an active prepolymer, or by a combination of the two methods, in such a way that the total atomic ratio of Al/(Zr + TM) in the prepolymerization medium is from 10 to 1000, preferably from 10 to 500 and especially from 20 to 300. The cocatalyst added to the prepolymerization medium, if any, may be identical to or different from that used in the polymerization. The prepolymerization may be stopped when the prepolymer contains from 0.1 to 500, preferably from 1 to 400 g, especially from 10 to 250 g of polyolefin per millimole of zirconium and transition metal (TM).

The prepolymer constitutes a further aspect of the invention and comprised particles of polyethylene or a copolymer of ethylene with up to 10% by weight of at least one C3 to C8 alpha-olefin, and comprises a catalyst containing a zirconium metallocene and at least one halide of a transition metal (TM) selected amongst titanium or vanadium, active for a (co-)polymerization of olefins. The catalyst component of the prepolymer essentially comprises atoms of magnesium, chlorine, aluminium, zirconium, titanium and/or vanadium, and preferably is free from refractory oxide, such as alumina or silica. The prepolymer contains from 0.1 to 500, preferably from 1 to 400, especially from 10 to 250 g of polyethylene or a copolymer of ethylene per millimole of zirconium and transition metal (TM), and has a total atomic ratio of Al/(Zr + TM) from 10 to 1000, preferably from 10 to 500 and especially from 20 to 300. Advantageously the prepolymer may consists of spheroidal particles, having a mass-average diameter, Dm, from 10 to 500, preferably from 30 to 300, especially from 50 to 250 microns, and a narrow particle size distribution such that the ratio of Dm to the number-average diameter Dn of the particles is not higher than 3, preferably not higher than 2.5 and especially not higher than 2.

The catalyst or the prepolymer is particularly suitable for a heterogeneous polymerization process, either in suspension in a saturated aliphatic hydrocarbon or in gaseous phase in a fluidized bed, under a total pressure of 0.1 to 5 MPa and at a temperature of 0 to 110°C, in the presence of a cocatalyst, such as that described above, preferably an organoaluminium compound and especially an aluminoxane such as described above or a mixture of a trialkylaluminium with an aluminoxane, in a quantity such that the total atomic ratio of Al/(Zr + TM) in the (co-)polymerization medium is from 10 to 1000, preferably from 10 to 500, especially from 20 to 300.

The catalyst or preferably the prepolymer is advantageously used in a gas phase polymerization process, such as in a fluidized bed reactor, because the polymers or copolymers of ethylene thus obtained generally consist of powders having improved flowing properties and higher bulk density in comparison with those obtained in a slurry process.

The polymers or copolymers of ethylene obtainable according to the present invention, preferably in a gas phase (co-)polymerization process, constitute a further aspect of the invention and may have a density from 0.89 to 0.965 g/cm$^3$ preferably 0.91 to 0.96 g/cm$^3$, a melt index (measured according to ASTM-D-1238 condition F) from 0.01 to 100, preferably from 0.02 to 50 g/10 minutes, a molecular weight distribution (expressed by the ratio Mw/Mn) higher than 5 and lower than 15, preferably higher than 5 and lower than 12. In particular, the melt flow ratio (MFR) of the (co-)polymers expressed by the ratio of the melt index measured according to ASTM-D-1238 condition F to that measured according to ASTM-D-1238 condition E may be from 60 to 350, preferably from 80 to 250. The flow parameter (FP) of the (co-)polymers expressed by the following equation:

$$FP = \log (MI_{21.6}/MI_5)/\log(21.6/5)$$

wherein $MI_{21.6}$ is the melt index measured according to ASTM-D-1238 condition F and $MI_5$ is the melt index measured according to ASTM-D-1238 condition P, may be from 1.9 to 3.5, preferably from 2.0 to 3.2. The high values of MFR and/or FP mean that the (co-)polymers of the present invention have a broad molecular weight distribution.

The catalyst residues of the (co-)polymers are usually free from refractory oxide, such as alumina or silica, and essentially consist of atoms of magnesium, chlorine, aluminium, zirconium, titanium and/or vanadium, in particular the quantity of zirconium being 0.5 to 20, preferably from 1 to 10, especially from 1 to 6 (ppm) parts by weight by million parts of (co-)polymer. The titanium and/or vanadium content of the (co-)polymers may be less than 0.5 ppm and not higher than 30 ppm, preferably from 0.5 to 20 ppm and especially from 0.5 to 10 ppm, particularly when the zirconium content is from 1 to 6 ppm.

The (co-)polymers have a level of ethylenic unsaturation not higher than 0.6, e.g. 0.1 to 0.6, and preferably from 0.3 to 0.5 per 1000 carbon atoms. Particularly, their level of vinyl unsaturation may be not higher than 0.5, e.g. 0.1 to 0.5, preferably from 0.2 to 0.4 per 1000 carbon atoms. Furthermore, their level of vinylidene unsaturation may be not higher than 0.2, e.g. 0.01 to 0.2 and preferably from 0.05 to 0.1 per 1000 carbon atoms.

The copolymers of ethylene may contain up to 30% by weight, e.g. from about 0.1 to 25% by weight, preferably from 5 to 25% by weight of at least one C3 to C8 alpha-olefin, e.g. propylene, butene-1, hexene-1, methyl-4-pentene-1 or octene-1.

The (co-)polymers of ethylene of the present invention may be directly obtained from a gas phase (co-)polymerization in the form of a powder having a bulk density from 0.3 to 0.55, preferably from 0.3 to 0.5 g/cm$^3$, and preferably consisting of spheroidal porous particles having a mass-average diameter Dm from 150 to 1500, preferably from 160 to 1000 microns and a narrow particle size distribution such that the ratio of Dm to the number-average diameter Dn of the particles is not higher than 3.5, preferably not higher than 3 and especially not higher than 2.5 or even not higher than 2, especially 1.1 to 3.5.

The (co-)polymers of ethylene may have a particularly broad molecular weight distribution expressed by the ratio Mw/Mn of the weight-average molecular weight, Mw, to the number-average molecular weight, Mn, or by the melt flow ratio (MFR) or the flow parameter (FP) as defined above. Preferably the (co-)polymers of ethylene of the present invention have a molecular weight distribution of a bimodal type, containing two distinct groups of polymer whose weight-average molecular weights are comprised for the first group between $10^4$ and $10^5$, and for the second group between $4 \times 10^5$ and $2 \times 10^6$.

Method of determining the mass-average (Dm) and number-average (Dn) diameters of particles

The mass-average (Dm) and number-average (Dn) diameters of the support or catalyst or prepolymer or polymer particles are measured on the basis of microscopic observations, by means of the Optomax image analyser (Micro-Measurement Ltd, Great Britain). The principle of the measurement consists in obtaining, from the experimental study of a population of particles using optical microscopy, a frequency table which gives the number (ni) of particles belonging to each class (i) of diameter, each class (i) being characterized by an intermediate diameter (di) included within the limits of the said class. According to the approved French Standard NF X 11-630 of June 1981, Dm and Dn are given by the following formulae:

$$\text{mass-average diameter: } Dm = \frac{\Sigma ni(di)^3 di}{\Sigma ni(di)^3}$$

$$\text{number-average diameter: } Dn = \frac{\Sigma ni.di}{\Sigma ni}$$

The ratio Dm/Dn characterizes the particle size distribution; it is sometimes called "width of the particle size distribution". The measurement using the Optomax image analyser is carried out by means of an inverted microscope which permits the examination of the suspensions of particles with a magnification of between 16 and 200 times. A television camera picks up the images given by the inverted microscope and transmits them to a computer which analyses the images received line by line and point by point on each line, in order to determine the particle dimensions or diameters, and then to classify them.

Measurement of the molecular weight distribution

The molecular weight distribution of a (co)polymer is calculated according to the ratio of the weight-average molecular weight Mw to the number-average molecular weight Mn, of the (co)polymer, from a molecular weight distribution curve obtained by means of a Waters 150 C(R) (trademark) gel permeation chromatograph (High Temperature Size Exclusion Chromatograph), the operating conditions being the following:

- Solvent: 1,2,4-trichlorobenzene
- Solvent flow rate: 1 ml/minute
- Three "Shodex"(R) (trademark) model AT 80 M/S columns
- Temperature: 150°C
- Sample concentration: 0.1% by weight
- Injection volume: 500 microlitres
- Detection by a refractometer integral with the chromatograph
- standardization using a high density polyethylene sold by BP Chemicals S.N.C. under the trade name Rigidex 6070 EA(R): Mw = 65,000 and Mw/Mn = 4, and a high density polyethylene which has: Mw = 210,000 and Mw/Mn = 17.5.

The following nonlimiting examples illustrate the invention.

Example 1

a) Preparation of a support

10.2 litres of a mixture containing 10 moles of dibutylmagnesium in n-hexane, followed by 6.45 litres of n-hexane and finally 1 litre of diisoamyl ether were introduced in the course of a first stage under nitrogen, at room temperature, into a 30-litre stainless steel reactor equipped with a stirrer rotating at a speed of 500 revolutions per minute and a jacket. In a second stage, during which the speed of the stirrer was maintained at 500 revolutions per minute and the reactor temperature at 25°C, 2.4 l of tert-butyl chloride were added to the mixture thus obtained, at a constant flow rate for 12 hours. At the end of this period the reaction mixture was maintained at 25°C for 3 hours. The precipitate obtained was washed 6 times, each with 10 litres of n-hexane. The solid product obtained constituted the magnesium dichloride support, containing 0.12 moles of diisoamyl ether per mole of magnesium dichloride and less than 0.001 mole of Mg-C bond. When examined with a microscope, the support was in the shape of spherical particles which had a mass-average diameter of 35 microns and an extremely narrow particle size distribution, such that the Dm/Dn ratio of the particles was equal to 1.4.

The specific surface area of the support was approximately 45 $m^2/g$ (BET). The support was isolated in the form of a dry powder, under nitrogen atmosphere, after the n-hexane had been evaporated off under vacuum, at 50°C.

b) Preparation of a catalyst

A quantity of previously prepared support in the form of a dry powder corresponding to 100 millimoles of Mg was introduced at 25°C under nitrogen atmosphere into a glass reactor with a capacity of 1 litre, equipped with a stirrer rotating at 350 revolutions/minute and with a heating and cooling system. 100 ml of a mixture containing a solution of 1 millimole of bis(cyclopentadienyl)dichlorozirconium (Cp2ZrCl2) in toluene and 100 milliatoms of aluminium as methylaluminoxane (MAO) in solution at a concentration of 30% by weight in toluene, the solution of (MAO) being sold by Schering (Germany), was introduced into the reactor with stirring. The mixture thus obtained was then kept stirred at 25°C for two hours. At the end of this period the stirring was stopped and the solid thus obtained was washed four times, each with 100 ml of n-hexane at 25°C.

After washing, the solid was kept in the reactor in suspension in 100 ml of n-hexane. 0.5 millimoles of titanium tetrachloride ($TiCl_4$) were then introduced into the reactor at 25°C. The reactor was heated to 70°C and the mixture was then stirred at 70°C for two hours. At the end of this period the reactor was cooled to 25°C and the solid catalyst thus obtained was washed four times, each with 500 ml of n-hexane at 25°C.

A solid catalyst which was ready for use was obtained in the form of spheroidal particles which had Dm = 35 microns and a Dm/Dn ratio = 1.5. It contained the elements Zr, Ti, Mg and Al and diisoamyl ether in the following molar ratios:

- Zr/Mg = 0.006
- Zr/Ti = 1.5
- Al/Mg = 0.14
- Diisoamyl ether/Mg = 0.02

c) Polymerization of ethylene in suspension in n-hexane

750 ml of n-hexane were introduced under a nitrogen atmosphere into a stainless steel reactor with a capacity of 2 litres, equipped with a stirrer rotating at 350 revolutions/minute and with a heating and cooling system. The reactor was heated to 70°C and a quantity of previously prepared catalyst was introduced into it, corresponding to 0.1 millimole of zirconium and 15 milliatoms of aluminium as methylaluminoxane (MAO) in solution at a concentration of 30% by weight in toluene, the solution of (MAO) being sold by Schering Company (Germany). A volume of hydrogen was then introduced into the reactor, such that a partial pressure of hydrogen of 0.2 MPa was obtained, followed by ethylene at a steady flow rate of 120 g/h for 2 hours. At the end of this period the polymerization was stopped and after the n-hexane had been removed a polyethylene powder was recovered, consisting of spheroidal particles which had Dm = 170 microns, a Dm/Dn ratio = 1.5 and a bulk density (BD) of 0.3 $g/cm^3$. The melt index ($MI_{8.5}$) of the polyethylene was 0.4g/10 minutes, measured at 190°C under a weight of 8.5 kg. The Mw/Mn ratio of the polyethylene, measured by GPC, was 5.1.

Examples 2 to 5

a) Catalyst preparations

The procedure was exactly as in Example 1, apart from the fact that, instead of employing 1 millimole (Cp2ZrCl2), 100 milliatoms of aluminium as (MAO) and 0.5 millimoles of ($TiCl_4$), the quantities shown in Table 1 were employed.

The catalysts thus obtained had the characteristics collated in Table 1.

b) Ethylene polymerizations

The procedures were exactly as in Example 1, apart from the fact that instead of employing the catalyst prepared in Example 1, the catalysts prepared in Examples 2 to 5 were employed.

The polyethylenes thus obtained had the characteristics collated in Table 2.

Example 6

a) Preparation of a catalyst

The procedure was exactly as in Example 1, apart from the fact that instead of employing 0.5 millimoles of ($TiCl_4$), 0.5 millimoles of vanadium tetrachloride ($VCl_4$) were employed.

The catalyst thus obtained had the characteristics collated in Table 3.

b) Ethylene polymerization

The procedure was exactly as in Example 1, apart from the fact that instead of employing the catalyst prepared in Example 1, that prepared in Example 6 was employed.

The polyethylene thus obtained had the characteristics collated in Table 4.

Example 7

Catalyst preparation

The procedure was exactly as in Example 1, apart from the fact that 100 ml of a mixture containing a solution of 10 millimoles of (Cp2ZrCl2) in toluene and 250 milliatoms of aluminium as (MAO) in solution in toluene were used and the temperature was fixed at 70°C during the introduction of the components into the reactor and during the two hours when the mixture was kept stirred. At the end of this period the stirring was stopped and the solid thus obtained was washed ten times, each with 100 ml of n-hexane at 70°C

After washing, the solid was kept in the reactor in suspension in 100 ml of n-hexane at 70°C. 0.5 millimoles of $TiCl_4$ were then introduced into the reactor. The mixture was then stirred at 70°C for two hours. At the end of this period the reactor was cooled to 25°C and the solid catalyst thus obtained was washed ten times, each with 500 ml of n-hexane at 25°C.

The catalyst had the characteristics collated in Table 5.

Examples 8 and 9

a) Catalyst preparations

The procedures were exactly as in Example 7, apart from the fact that instead of 100 ml of the mixture containing (Cp2ZrCl2) and (MAO), 200 ml of a mixture containing a solution of 10 millimoles of (Cp2ZrCl2) in toluene and 250 milliatoms of aluminium as (MAO) in solution in toluene were used, and 1 and 5 millimoles of $TiCl_4$ were introduced into the reactor respectively in Examples 8 and 9, instead of 0.5 millimoles of $TiCl_4$.

The catalysts had the characteristics collated in Table 5.

b) Ethylene polymerizations

The procedures were exactly as in Example 1, apart from the fact that instead of employing the catalyst prepared in Example 1, the catalysts prepared in Examples 8 and 9 were employed and 150 milliatoms of aluminium as MAO were used with the catalyst prepared in Example 9.

The polyethylenes thus obtained had the characteristics collated in Table 6.

Examples 10 and 11

a) Catalyst preparations

The procedures were exactly as in Example 7, apart from the fact that instead of 100 ml of the mixture containing (Cp2ZrCl2) and (MAO), 200 ml of a solution of 10 millimoles of ($Cp2ZrCl_2$) in toluene were used, and 1 and 5 millimoles of $TiCl_4$ were introduced into the reactor respectively in Examples 10 and 11, instead of 0.5 millimoles of $TiCl_4$.

The catalysts had the characteristics collated in Table 5.

b) Ethylene polymerizations

The procedures were exactly as in Example 1, apart from the fact that instead of employing the catalyst prepared in Example 1, the catalysts prepared in Examples 10 and 11 were employed, and 150 milliatoms of aluminium as MAO were used instead of 15 milliatoms.

The polyethylene thus obtained had the characteristics collated in Table 6.

Example 12

a) Catalyst preparation

The procedure was exactly as in Example 9.

b) Prepolymer preparation

Into a 5 litre stainless steel reactor equipped with a stirrer rotating at 500 revolutions/minute were introduced under nitrogen 2 litres of n-hexane which were heated to 70°C, then a mixture consisting of 300 milliatoms of aluminium as (MAO) in solution at a concentration of 30% by weight in toluene and a quantity of the previously prepared catalyst corresponding to 1.5 milliatoms of zirconium. Ethylene was then introduced into the reactor at a uniform rate of 120 g/h for 90 minutes. At the end of this period, the reactor was cooled to 20°C and the content of the reactor was transferred to a rotary evaporator. The solvent was evaporated off under reduced pressure at a temperature of 60°C. A prepolymer powder was thus obtained and stored under nitrogen. It contained 71 g of polyethylene per millimole of zirconium and titanium and the atomic ratio of Al/(Zr + Ti) was 124. It consisted of spheroidal particles having Dm = 150 microns and a particle size distribution such that the ratio Dm/Dn = 1.6.

c) Gas phase polymerization of ethylene

A powder charge of 800 g of a polyethylene originating from a preceding polymerization and which had been stored under nitrogen, was introduced into a fluidized bed reactor of 18 cm diameter. The reactor was heated to 80°C and ethylene was introduced into it, so as to obtain a pressure of 0.8 MPa. Ethylene passed upwardly through the bed with a fluidization speed of 30 cm/sec.

25 g of the previously prepared prepolymer were introduced into the fluidized bed reactor and the temperature in the bed was kept at 80°C during 3 hours. A polyethylene powder was thus prepared having a density of 0.95 g/cm$^3$, a zirconium content of 6 ppm, a titanium content of 2 ppm, a level of vinyl unsaturation of 0.4 per 1000 carbon atoms and a level of vinylidene unsaturation of 0.1 per 1000 carbon atoms. The powder produced consisted of spheroidal particles, having Dm = 790 microns, a ratio Dm/Dn = 1.6, and a bulk density of 0.42 g/cm$^3$.

Example 13

Gas phase polymerization of ethylene

The procedure was exactly as in Example 12, apart from the fact that the temperature was 90°C, the ethylene pressure was 0.4 MPa and the polymerization was stopped after 5 hours of reaction.

A polyethylene powder was thus prepared having a density of 0.95 g/cm$^3$, a zirconium content of 6 ppm, a titanium content of 2 ppm, a level of vinyl unsaturation of 0.4 per 1000 carbon atoms and a level of vinylidene unsaturation of 0.1 per 1000 carbon atoms. The powder produced consisted of spheroidal porous particles having Dm = 780 microns, a ratio Dm/Dn = 1.6 and a bulk density of 0.43 g/cm$^3$.

Example 14

Gas phase copolymerization of ethylene with butene-1

The procedure was exactly as in Example 12, apart from the fact a gaseous mixture of 85% by volume of ethylene and 15% by volume of butene-1 was introduced into the reactor, so as to obtain a total pressure of 0.8 MPa.

A copolymer of ethylene with butene-1 in the form of a powder was thus prepared having a density of 0.92 g/cm$^3$.

TABLE 1

PREPARATION AND CHARACTERISTICS OF THE CATALYSTS

| | QUANTITIES USED | | | ANALYSIS OF THE CATALYST | | | | | |
|---|---|---|---|---|---|---|---|---|---|
| Example | $Cp_2ZrCl_2$ (millimole) | Milliatoms of Al as MAO | $TiCl_4$ (millimoles) | Dm/Dn | Dm (micron) | Zr/Mg (atom ratio) | Zr/Ti (atom ratio) | Al/Mg (atom ratio) | D/Mg (molar ratio) |
| 2 | 1 | 100 | 5 | 1.6 | 35 | 0.005 | 0.1 | 0.23 | 0.02 |
| 3 | 1 | 100 | 0.1 | 1.6 | 35 | 0.006 | 6 | 0.22 | 0.01 |
| 4 | 1 | 75 | 0.1 | 1.5 | 35 | 0.008 | 16 | 0.22 | 0.01 |
| 5 | 1 | 25 | 0.07 | 1.5 | 35 | 0.007 | 14 | 0.13 | 0.02 |

TABLE 2

| POLYMERIZATION OF ETHYLENE AND POLYETHYLENES OBTAINED | | | | | |
|---|---|---|---|---|---|
| Example | Dm (microns) | Dm/Dn | $MI_{8.5}$ (g/10 minutes) | Mw/Mn | BD ($g/cm^3$) |
| 2 | 180 | 1.7 | 11.5 | 5.2 | 0.3 |
| 3 | 170 | 1.6 | 0.3 | 5.5 | 0.4 |
| 4 | 170 | 1.6 | - | - | 0.3 |
| 5 | 170 | 1.6 | - | - | 0.3 |

TABLE 3

PREPARATION AND CHARACTERISTICS OF THE CATALYST

| | QUANTITIES USED | | | ANALYSIS OF THE CATALYST | | | | | |
|---|---|---|---|---|---|---|---|---|---|
| Example | $Cp2ZrCl_2$ (millimole) | Milliatoms of Al as MAO | $VCl_4$ (millimoles) | Dm/Dn | Dm (micron) | Zr/Mg (atom ratio) | Zr/V (atom ratio) | Al/Mg (atom ratio) | D/Mg (molar ratio) |
| 6 | 1 | 100 | 0.5 | 1.5 | 35 | 0.006 | 1.2 | 0.15 | 0.02 |

TABLE 4

| POLYMERIZATION OF ETHYLENE AND POLYETHYLENE OBTAINED | | | | | |
|---|---|---|---|---|---|
| Example | Dm (microns) | Dm/Dn | $MI_{8.5}$ (g/10 minutes) | Mw/Mn | BD ($g/cm_3$) |
| 6 | 160 | 1.6 | 0.5 | 5.6 | 0.4 |

TABLE 5

PREPARATION AND CHARACTERISTICS OF THE CATALYSTS

| | QUANTITIES USED | | | ANALYSIS OF THE CATALYST | | | | | |
|---|---|---|---|---|---|---|---|---|---|
| Example | $Cp2ZrCl_2$ (millimole) | Milliatoms of Al as MAO | $TiCl_4$ (millimoles) | Dm/Dn | Dm (microns) | (atom ratio) Zr/Mg | (atom ratio) Zr/Ti | (atom ratio) Al/Mg | (molar ratio) D/Mg |
| 7 | 10 | 250 | 0.5 | 1.6 | 35 | 0.07 | 17.5 | 1.16 | 0.02 |
| 8 | 10 | 250 | 1 | 1.6 | 35 | 0.044 | 6.3 | 0.68 | 0.02 |
| 9 | 10 | 250 | 5 | 1.5 | 35 | 0.048 | 1.4 | 0.44 | 0.01 |
| 10 | 10 | 0 | 1 | 1.6 | 34 | 0.004 | 0.5 | 0 | 0.02 |
| 11 | 10 | 0 | 5 | 1.6 | 35 | 0.007 | 0.2 | 0 | 0.02 |

TABLE 6

| POLYMERIZATION OF ETHYLENE AND POLYETHYLENES OBTAINED | | | | | | | | |
|---|---|---|---|---|---|---|---|---|
| Example | Dm (microns) | Dm/Dn | $MI_{21\cdot6}$ (g/10 minutes | $MI_5$ (g/10 minutes) | $MI_{2\cdot16}$ (g/10 minutes | FP | MFR | BD ($g/cm^3$) |
| 8 | 180 | 1.6 | 1.0 | 0.03 | - | 2.40 | - | 0.4 |
| 9 | 230 | 1.6 | 7.1 | 0.08 | - | 3.07 | - | 0.4 |
| 10 | 200 | 2.3 | 8.4 | 0.22 | 0.07 | 2.49 | 120 | 0.3 |
| 11 | 190 | 2.5 | 3.85 | 0.125 | - | 2.34 | - | 0.3 |

**Claims**

1. Solid catalyst suitable for a heterogeneous process for polymerizing one or more olefins, the solid catalyst consisting of spheroidal particles in which the ratio D/d of the particles is lower than or equal to 1.5, D and d being the major and minor axes of the particles respectively and having a mass-average diameter, Dm, of 10 to 100 microns and a particle size distribution such that the ratio of Dm to the number-average diameter, Dn, of the particles is not higher than 3, the catalyst comprising:

   - a support containing from 90 to 99.9 mol% of magnesium dichloride and from 0.1 to 10 mol% of at least one organic electron-donor compound, D, free from labile hydrogen,
   - a zirconium metallocene,
   - at least one halide of a transition metal (TM) chosen from titanium or vanadium,
   - and optionally an organoaluminium compound, preferably an aluminoxane.

2. Catalyst according to Claim 1, characterized in that the magnesium dichloride, the zirconium metallocene, the transition metal (TM) halide and the organoaluminium compound are present in the catalyst with atomic ratios Zr/Mg ranging from 0.001 to 0.2, Zr/TM ranging from 0.01 to 100 and Al/Mg ranging from 0 to 2.

3. Process for preparing a solid catalyst, according to Claim 1, characterized in that:

   (1) a solid support (A) containing from 80 to 99.5 mol% of magnesium chloride and from 0.5 to 20 mol% of at least one organic electron-donor compound, D, free from labile hydrogen, the solid support (A) being in the form of spheroidal particles having a mass-average diameter, Dm, of 10 to 100 microns and a particle size distribution such that the ratio of Dm to the number-average diameter, Dn, of the particles is not higher than 3, is brought into contact in an inert atmosphere
   (2) with a zirconium metallocene (B) and at least one halide (C) of a transition metal (TM) chosen from titanium or vanadium, and optionally with an organoaluminium compound (E), preferably an aluminoxane.

4. Prepolymer particles comprising (i) a polyethylene or a copolymer of ethylene with up to 10% by weight of at least one C3 to C8 alpha-olefin and (ii) an active catalyst for a (co-)polymerization of olefins essentially containing atoms of magnesium, chlorine, aluminium, zirconium, titanium and/or vanadium and comprising the solid catalyst of claim 1 in quantities such that the prepolymer contains from 0.1 to 500 g of polyethylene or copolymer of ethylene per millimole of zirconium and transition metal (TM), and the atomic ratio Al/(Zr + TM) is from 10 to 1000.

5. Prepolymer particles according to Claim 4, characterised in that they consist of spheroidal particles having a mass-average diameter, Dm, from 10 to 500 microns and a particle size distribution such that the ratio of Dm to the number-average diameter, Dn, of the particles is not higher than 3.

6. Process for preparing the prepolymer particles according to Claim 4, characterized in that a solid catalyst according to Claim 1, is contacted with ethylene or a mixture of ethylene and at least one C3 to C8 alpha-olefin in a liquid hydrocarbon or in a gas phase at a temperature from 0 to 100°C, under a total pressure from 0.1 to 5 MPa, in the presence of an organoaluminium compound preferably an aluminoxane in a quantity such that the atomic ratio Al/(Zr + TM) is from 10 to 1000.

7. Process for polymerizing ethylene or copolymerizing ethylene with at least one C3 to C8 alpha-olefin, characterized in that a solid catalyst according to Claim 1, or the prepolymer particles according to Claim 4, are contacted with ethylene or a mixture of ethylene with at least one C3 to C8 alpha-olefin, at a temperature of 0 to 110°C, under a total pressure of 0.1 to 5 MPa, in the presence of an organoaluminium compound in a quantity such that the atomic ratio Al/(Zr + TM) is from 10 to 1,000.

8. Process according to Claim 7, characterized in that the polymerization or copolymerization is performed in a liquid hydrocarbon slurry or, preferably, in a gas phase.

9. Polymer or copolymer powder obtainable by the process according to Claim 7, comprising (i) a polyethylene or a copolymer of ethylene with up to 30% by weight of at least one C3 to C8 alpha-olefin, having a density from 0.89 to 0.965 $g/cm^3$, a melt index (ASTM-D-1238 condition F) from 0.01 to 100 g/10 minutes, a molecular weight distribution higher than 5 and lower than 15 and a level of ethylenic unsaturation not higher than 0.6 per 1000 carbon atoms, and (ii) catalyst residues essentially consisting of atoms of magnesium, chlorine, aluminium, zirconium, titanium and/or vanadium, the quantity of zirconium being from 0.5 to 20 parts by weight per million, the said powder having a bulk density from 0.3 to 0.55 $g/cm^3$.

10. Polymer or copolymer powder according to Claim 9, characterized in that it consists of spheroidal particles having a mass-average diameter, Dm, from 150 to 1500 microns and a particle size distribution such that the ratio of Dm to the number-average diameter, Dn, of the particles is not higher than 3.5.

**Patentansprüche**

1. Fester Katalysator mit Eignung für ein heterogenes Verfahren zur Polymerisation eines oder mehrerer Olefine, wobei der feste Katalysator aus kugelförmigen Teilchen mit einem Verhältnis $D/d \leqq 1,5$, wobei D bzw. d die Hauptachse bzw. Nebenachse der Teilchen bedeuten, und einem massegemittelten Durchmesser Dm von 10 bis 100 $\mu m$ und einer derartigen Teilchengrößeverteilung, daß das Verhältnis Dm/anzahlgemittelter Durchmesser Dn der Teilchen nicht mehr als 3 beträgt, besteht und

- einen Träger, der 90 bis 99,9 mol-% Magnesiumdichlorid und 0,1 bis 10 mol-% mindestens einer keinen labilen Wasserstoff aufweisenden organischen Elektronendonorverbindung D enthält,
- ein Zirkoniummetallocen,
- mindestens ein Halogenid eines Übergangsmetalls (TM), das unter Titan und Vanadium ausgewählt ist,
- gegebenenfalls eine Organoaluminiumverbindung, vorzugsweise ein Aluminoxan umfaßt.

2. Katalysator nach Anspruch 1, dadurch gekennzeichnet, daß das Magnesiumdichlorid, das Zirkoniummetallocen, das Übergangsmetall (TM)-halogenid und die Organoaluminiumverbindung in dem Katalysator in Atomverhältnissen Zr/Mg im Bereich von 0,001 bis 0,2, Zr/TM im Bereich von 0,01 bis 100 und Al/Mg im Bereich von 0 bis 2 vorhanden sind.

3. Verfahren zur Herstellung eines festen Katalysators nach Anspruch 1, das dadurch gekennzeichnet ist, daß

(1) ein 80 bis 99,5 mol-% Magnesiumchlorid und 0,5 bis 20 mol-% mindestens einer keinen labilen Wasserstoff aufweisenden organischen Elektronendonorverbindung D enthaltender fester Träger (A) in Form von kugelförmigen Teilchen mit einem massegemittelten Durchmesser Dm von 10 bis 100 $\mu m$ und einer derartigen Teilchengrößeverteilung, daß das Verhältnis Dm/anzahlgemittelter Durchmesser Dn der Teilchen nicht mehr als 3 beträgt, in einer Inertatmosphäre mit

(2) einem Zirkoniummetallocen (B) und mindestens einem Halogenid (C) eines unter Titan und Vanadium ausgewählten Übergangsmetalls (TM) und gegebenenfalls einer Organoaluminiumverbindung (E), vorzugsweise einem Aluminoxan, in Berührung gebracht wird.

4. Präpolymerteilchen, umfassend (i) ein Polyethylen oder ein Copolymer von Ethylen mit bis zu 10 Gew.-% mindestens eines $C_3$-$C_8$-alpha-Olefins und (ii) einen aktiven Katalysator zur (Co)polymerisation von Olefinen, der im wesentlichen Magnesium-, Chlor-, Aluminium-, Zirkonium-, Titan- und/oder Vanadiumatome enthält und den festen Katalysator nach Anspruch 1 in derartigen Mengen umfaßt, daß das Präpolymer 0,1 bis 500 g Polyethylen oder

Ethylencopolymer pro mmol Zirkonium und Übergangsmetall (TM) enthält und das Atomverhältnis Al/(Zr + TM) 10 bis 1000 beträgt.

5. Präpolymerteilchen nach Anspruch 4, dadurch gekennzeichnet, daß sie aus kugelförmigen Teilchen mit einem massegemittelten Durchmesser Dm von 10 bis 500 µm und einer derartigen Teilchengrößeverteilung bestehen, daß das Verhältnis Dm/anzahlgemittelter Durchmesser Dn der Teilchen nicht mehr als 3 beträgt.

6. Verfahren zur Herstellung der Präpolymerteilchen nach Anspruch 4, dadurch gekennzeichnet, daß ein fester Katalysator nach Anspruch 1 mit Ethylen oder einem Gemisch von Ethylen und mindestens einem $C_3$-$C_8$-alpha-Olefin in einem flüssigen Kohlenwasserstoff oder in der Gasphase bei einer Temperatur von 0 bis 100°C und einem Gesamtdruck von 0,1 bis 5 MPa in Gegenwart einer Organoaluminiumverbindung, vorzugsweise eines Aluminoxans, in einer derartigen Menge, daß das Atomverhältnis Al/(Zr + TM) 10 bis 1000 beträgt, in Berührung gebracht wird.

7. Verfahren zur Polymerisation von Ethylen oder Copolymerisation von Ethylen mit mindestens einem $C_3$-$C_8$-alpha-Olefin, dadurch gekennzeichnet, daß ein fester Katalysator nach Anspruch 1 oder die Präpolymerteilchen nach Anspruch 4 mit Ethylen oder einem Gemisch von Ethylen mit mindestens einem $C_3$-$C_8$-alpha-Olefin bei einer Temperatur von 0 bis 110°C und einem Gesamtdruck von 0,1 bis 5 MPa in Gegenwart einer Organoaluminiumverbindung in einer derartigen Menge, daß das Atomverhältnis Al/(Zr + TM) 10 bis 1000 beträgt, in Berührung gebracht werden.

8. Verfahren nach Anspruch 7, dadurch gekennzeichnet, daß die Polymerisation oder Copolymerisation in einer Aufschlämmung eines flüssigen Kohlenwasserstoffs oder vorzugsweise in der Gasphase erfolgt.

9. Polymer- oder Copolymerpulver, erhältlich nach einem Verfahren gemäß Anspruch 7, das (i) ein Polyethylen oder ein Copolymer von Ethylen mit bis zu 30 Gew.-% mindestens eines $C_3$-$C_8$-alpha-Olefins mit einer Dichte von 0,89 bis 0,965 g/cm$^3$, einem Schmelzindex (ASTM-D-1238, Bedingung F) von 0,01 bis 100 g/10 min, einer Molekulargewichtsverteilung von mehr als 5 und weniger als 15 und einem Gehalt an ethylenischer Nichtsättigung von mehr als 0,6 pro 1000 Kohlenstoffatome und (ii) Katalysatorreste im wesentlichen aus Magnesium-, Chlor-, Aluminium-, Zirkonium-, Titan- und/oder Vanadiumatomen umfaßt, wobei die Menge an Zirkonium 0,5 bis 20 Gew.-Teile pro Million beträgt und wobei das Pulver eine Schüttdichte von 0,3 bis 0,55 g/cm$^3$ aufweist.

10. Polymer- oder Copolymerpulver nach Anspruch 9, dadurch gekennzeichnet, daß es aus kugelförmigen Teilchen mit einem massegemittelten Durchmesser Dm von 150 bis 1500 µm und einer derartigen Teilchengrößeverteilung besteht, daß das Verhältnis Dm/anzahlgemittelter Durchmesser Dn der Teilchen nicht mehr als 3,5 beträgt.

**Revendications**

1. Catalyseur solide approprié à un procédé hétérogène pour la polymérisation d'une ou plusieurs oléfines, ledit catalyseur solide étant constitué de particules sphéroïdales, dans lequel le rapport D/d des particules est inférieur ou égal à 1,5, D et d étant le grand et le petit axe des particules respectivement et ayant un diamètre moyen en masse, Dm, compris entre 10 et 100 micromètres et une distribution granulométrique telle que le rapport Dm au diamètre moyen en nombre, Dn, des particules ne dépasse pas 3, le catalyseur comprenant:

- un support contenant entre 90 et 99,9% en moles de dichlorure de magnésium et entre 0,1 et 10% en moles d'au moins un composé organique donneur d'électrons, D, exempt d'hydrogène labile,
- un métallocène de zirconium,
- au moins un halogénure d'un métal de transition (MT) choisi parmi le titane ou le vanadium,
- et, éventuellement, un composé organoaluminique, de préférence un aluminoxane.

2. Catalyseur selon la revendication 1, caractérisé en ce que le dichlorure de magnésium, le métallocène de zirconium, l'halogénure de métal de transition (MT) et le composé organoaluminique sont présents dans le catalyseur avec des rapports atomiques, Zr/Mg compris entre 0,001 et 0,2, Zr/MT compris entre 0,01 et 100 et Al/Mg compris entre 0 et 2.

3. Procédé pour préparer un catalyseur solide, selon la revendication 1, caractérisé en ce que:

(1) un support solide (A) contenant entre 80 et 99,5% en moles de dichlorure de magnésium et entre 0,5 et 20% en moles d'au moins un composé organique donneur d'électrons, D, exempt d'hydrogène labile, le support solide (A) étant sous la forme de particules sphéroïdales ayant un diamètre moyen en masse, Dm, compris entre 10 et 100 micromètres et une distribution granulométrique telle que le rapport de Dm au diamètre moyen en nombre, Dn, des particules ne dépasse pas 3, est mis en contact en atmosphère inerte

(2) avec un métallocène de zirconium (B), et au moins un halogénure (C) d'un métal de transition (MT) choisi parmi le titane ou le vanadium, et éventuellement avec un composé organoaluminique (E), de préférence un aluminoxane.

**4.** Particules de prépolymère comprenant (i) un polyéthylène ou un copolymère d'éthylène avec jusqu'à 10% en poids d'au moins une alpha-oléfine en $C_3$ à $C_8$ et (ii) un catalyseur actif pour une (co)polymérisation des oléfines contenant essentiellement des atomes de magnésium, de chlore, d'aluminium, de zirconium, de titane et/ou de vanadium et comprenant le catalyseur solide de la revendication 1 en des quantités telles que le prépolymère contienne entre 0,1 et 500 g de polyéthylène ou de copolymère d'éthylène par millimole de zirconium et de métal de transition (MT), et que le rapport atomique Al/(Zr + MT) soit compris entre 10 et 1 000.

**5.** Particules de prépolymère selon la revendication 4, caractérisées en ce qu'elles sont constituées de particules sphéroïdales ayant un diamètre moyen en masse, Dm, compris entre 10 et 500 micromètres et une distribution granulométrique telle que le rapport de Dm au diamètre moyen en nombre, Dn, des particules ne dépasse pas 3.

**6.** Procédé pour préparer des particules de prépolymère selon la revendication 4, caractérisé en ce qu'un catalyseur solide selon la revendication 1, est mis en contact avec de l'éthylène ou un mélange d'éthylène et d'au moins une alpha-oléfine en $C_3$ à $C_8$ dans un hydrocarbure liquide ou dans une phase gazeuse à une température comprise entre 0 et 100°C, sous une pression totale comprise entre 0,1 et 5 MPa, en présence d'un composé organoaluminique de préférence un aluminoxane en une quantité telle que le rapport atomique Al/(Zr+MT) soit compris entre 10 et 1 000.

**7.** Procédé pour la polymérisation de l'éthylène ou la copolymérisation de l'éthylène avec au moins une alpha-oléfine en $C_3$ à $C_8$, caractérisé en ce que le catalyseur solide selon la revendication 1, ou les particules de prépolymère selon la revendication 4, sont mis en contact avec l'éthylène ou un mélange d'éthylène avec au moins une alpha-oléfine en $C_3$ à $C_8$, à une température comprise entre 0 et 110°C, sous une pression totale comprise entre 0,1 et 5 MPa, en présence d'un composé organoaluminique en une quantité telle que le rapport atomique Al/(Zr + MT) soit compris entre 10 et 1 000.

**8.** Procédé selon la revendication 7, caractérisé en ce que l'on réalise la polymérisation ou la copolymérisation en suspension dans un hydrocarbure liquide ou, de préférence, en phase gazeuse.

**9.** Poudre de polymère ou de copolymère susceptible d'être obtenue à l'aide du procédé selon la revendication 7, comprenant (i) un polyéthylène ou un copolymère d'éthylène avec jusqu'à 30% en poids d'au moins une alpha-oléfine en $C_3$ à $C_8$, ayant une densité comprise entre 0,89 et 0,965 g/$cm^3$, un indice de fusion (ASTM-D1238 condition F) compris entre 0,01 et 100 g/10 minutes, une distribution de masse moléculaire supérieure à 5 et inférieure à 15 et un degré d'insaturation éthylénique ne dépassant pas 0,6 pour 1 000 atomes de carbone, et (ii) des résidus de catalyseur étant essentiellement constitués d'atomes de magnésium, de chlore, d'aluminium, de zirconium, de titane et/ou de vanadium, la quantité de zirconium étant comprise entre 0,5 et 20 parties en poids par million, ladite poudre ayant une densité apparente comprise entre 0,3 et 0,55 g/$cm^3$.

**10.** Poudre de polymère ou de copolymère selon la revendication 9, caractérisée en ce qu'elle est constituée de particules sphéroïdales ayant un diamètre moyen en masse, Dm, Compris entre 150 et 1 500 micromètres et une distribution granulométrique telle que le rapport de Dm au diamètre moyen en nombre, Dn, des particules ne dépasse pas 3,5.